# EUROPEAN PATENT SPECIFICATION

(11) **EP 0 712 415 B1**
(45) Date of publication and mention of the grant of the patent: **23.04.1997**
(21) Application number: 94921759.0
(22) Date of filing: 29.07.1994
(51) Int. Cl.: C08F 2/50, C09D 4/00, C08G 18/67, C07D 251/34, C07C 275/62

(54) **PHOTOCURABLE COATING COMPOSITIONS**
PHOTO-HÄRTBARE ÜBERZUGSZUSAMMENSETZUNGEN
COMPOSITIONS DE REVETEMENT PHOTODURCISSABLES

(30) Priority: 06.08.1993 GB 9316392
(43) Date of publication of application: 22.05.1996
(73) Proprietor: Coates Brothers PLC, Orpington Kent BR5 3PP (GB)
(72) Inventor: ILLSLEY, Derek, Ronald, Kent BR5 2BG (GB)
(74) Representative: Lamb, John Baxter
(86) International application number: GB9401644
(87) International publication number: WO9504760

(56) References cited:
- GB-A- 2 107 334
- US-A- 4 003 751
- CHEMICAL ABSTRACTS, vol. 114, no. 8, 25 February 1991, Columbus, Ohio, US; abstract no. 63843v, page 79-80 ; & JP,A,2 235 908 (SEKISUI CHEM. CO., LTD) 9 March 1990
- Database Chemical Abstracts (HOST: STN): access n 113: 25 636, Colombus, Ohio, US; & JP,A,01 230 603 (MITSUBISHI RAYON) 14 Sept.1989. cited in the application
- Database Chemical Abstracts (HOST: STN): access n 119: 183 010, Colombus, Ohio, US; & JP,A,05 065 323 (MITSUI TOATSU) 19 March 1993
- Database Chemical Abstracts (HOST: STN): access n 113: 25 636, Colombus, Ohio, US; & JP,A,01 230 603
- Database Chemical Abstracts (HOST: STN): access n 119: 183 010, Colombus, Ohio, US; & JP,A,05 065 323

## Description

This invention is concerned with improvements in and relating to coating compositions and, more particularly, it is concerned with photocurable coating compositions, especially compositions intended to be cured by exposure to ultraviolet light.

Typically, compositions adapted to be cured by exposure to ultraviolet light comprise two essential components, namely:
(i) one or more ethylenically unsaturated monomers or oligomers capable of addition polymerisation; and
(ii) a photoinitiator which, on exposure to ultraviolet irradiation, causes polymerisation of the ethylenically unsaturated component.

It has already been proposed, in JP-A-1-230603, to produce photoinitiator compositions comprising a photoinitiator chemically linked to an ethylenically unsaturated moiety whereby, at least in theory, the total extractables obtained after curing the composition may be reduced. However, the examples illustrated in JP-A-1-230603 give rise to relatively high levels of extractables after curing.

It has now been found, in accordance with the present invention, that improved compositions (in terms of reduced extractables after curing) may be obtained by linking a photoinitator moiety to an ethylenically unsaturated moiety by reaction with a polyisocyanate containing at least three reactive isocyanate groups.

According to the invention, therefore, there is provided a photoinitiator component, suitable for use in a composition curable by UV radiation comprising the reaction product of a polyisocyanate containing at least three isocyanate groups with (i) a hydroxyl group-containing photoinitiator and (ii) a hydroxyl group-containing ethylenically unsaturated compound.

The invention also provides a liquid composition, curable by exposure to UV radiation, containing:-
(a) a polymerisable component comprising one or more ethylenically unsaturated monomers or oligomers; and
(b) a photoinitiator component as defined above.

The photoinitiator-containing reaction product is preferably derived from its three ingredients (polyisocyanate, photoinitiator and ethylenically unsaturated compound) in such relative proportions that it contains, on average, more than one, preferably more than 1.5, unsaturated, residue per molecule, and on average, one or less photoinitiator residue per molecule when the polyisocyanate is a triisocyanate, in which case the mole ratio of unsaturated residues to photoinitiator residue is about 2:1. The reaction product may be produced by reaction of the polyisocyanate with the other two reactants sequentially (in either order) or in admixture. Suitably, the final reaction product has a molecular weight of from at least 900, preferably from 1,000 to 3,000.

Suitable polyisocyanates which may be used include, for example, biurets or isocyanurates which are homo- or copolymers of diisocyanate, e.g. the isocyanurate trimer of HMDI (hexamethylene diisocyanate), the isocyanurate pentamer of toluene diisocyanate, copolymers of toluene diisocyanate and hexamethylene diisocyanate, triphenylmethane-4,4'-4"-triisocyanate, and a trimer isocyanate prepared by reaction of toluene diisocyanate with a trihydric alcohol. A particularly preferred triisocyanate is HMDI biuret trimer (commercially available under the Trade Name Desmodur® N3200).

Suitable hydroxyl-group containing monomers, include monoethylenically unsaturated monomers and examples of these are hydroxyalkyl (meth)acrylates such as 2-hydroxyethyl (meth)acrylate, 2-hydroxypropyl (meth)acrylate, and 4-hydroxybutyl (meth)acrylate; polypropylene glycol mono-(meth)acrylates and polyethylene glycol mono-(meth)acrylate; poly(meth)acrylates of polyhydric alcohols such as dipentaerythritol pentaacrylate; and hydroxypolycaprolactone acrylate.

Examples of photoinitiator materials containing a reactive hydroxyl group include 4-(2-hydroxyethoxy)-phenyl-2-(2-hydroxy)propyl ketone, (which is particularly preferred) p-hydroxybenzophenone, m-hydroxybenzophenone, hydroxyacetophenone and hydroxypropiophenone.

The molecular weight of component (b) may be increased by using a dihydric alcohol as chain extender, e.g. an alkane diol such as 1,4-butanediol or 1,6-hexanediol, or a polyalkylene glycol such as dipropylene glycol, tripropylene glycol, diethylene glycol or triethylene glycol.

Suitable ethylenically unsaturated monomers which may be present in the ethylenically unsaturated component (a) include alkyl(meth)acrylates such as the (meth)acrylates of cyclohexanol, 2-ethoxy-ethanol, 2-methoxy-ethanol, stearyl alcohol, lauryl alcohol, hexyl alcohol, isobornyl alcohol, mono-ethoxy hexanediol, and dicyclopentyl alcohol; di-(meth)acrylates of dihydric alcohols such as 1,3-butylene glycol, 1,4-butanediol, diethylene glycol, 1,6-hexanediol, triethylene glycol, tripropylene glycol, propoxylated neopentyl glycol and ethoxylated neopentyl glycol; and poly(meth)acrylates of polyhydric alcohols such as trimethylol propane, pentaerythritol and its ethoxylated oligomers, and tris(2-hydroxyethyl)isocyanates. Oligomer species present in the polymerisable component (a) will typically be polyethylenically unsaturated and examples include so-called "epoxy acrylates", that is reaction products of ethylenically unsaturated carboxylic acids (typically acrylic acid or methacrylic acid) with polyepoxy compounds (so-called "epoxy resins") such as epoxy novolak resins or epoxy resin derived from bisphenols such as bisphenol A. Other ethylenically unsaturated oligomeric species include so-called "urethane acrylates", that is reaction products of polyisocyanates (including diisocyanates) with hydroxyalkyl acrylates, e.g. those discussed above.

The relative proportions of components (a) and (b) in the compositions of the invention should be such that the photoinitiator moiety of component (b) is present in a sufficient amount to initiate polymerisation of tne composition as a whole upon exposure to ultraviolet light. Typically, the weight ratio of component (a) to component (b) will be from 0.1:1 to 10:1, preferably from 0.1:1 to 5:1.

In addition to the two essential components, compositions in accordance with the invention may, and often will, also contain other components especially colouring agents (such as dyestuffs or pigments), waxes, antioxidants, flow agents.

The liquid coating compositions in accordance with the invention may be applied to a wide variety of substrates by any suitable appropriate means and then cured thereon by exposure to ultraviolet light. Thus, for example, the coating composition may be applied to the desired substrate by roll coating, curtain coating letterpress, offset lithography, gravure printing, silk screen printing or flexography and examples of substrate to which the composition may be applied include paper, board, glass, plastics materials and metals.

In order that the invention may be well understood the following examples are given by way of illustration only.

### Example 1

4.0g (0.018 mole) of 4-(2-hydroxyethoxy)-phenyl-2-(2-hydroxy)propyl ketone were added to 24.0g (0.13 mole equivalent isocyanate) of a biuret trimer of hexamethylene diisocyanate (Desmodur® N3200) along with 0.003g of dibutyltin dilaurate (catalyst) and 0.06g of 2,6-di-tert-butyl-4-methylphenol (BHT) (polymerisation inhibitor) to a flask equipped with an air purge and mechanical stirrer. The mixture was allowed to react at 55°C for 2 hours. Then, 14.0g (0.108 mole) of 2-hydroxypropyl acrylate (HPA) was added dropwise over 1 hour. The temperature was maintained at 55°C for a further two hours. The temperature was then raised to 65°C-75°C for a further 2.5 hours to ensure complete reaction of all reagents. To the mixture was then added 0.5g of (0.005 mole) of glycerol which ensured complete reaction of all isocyanate groups. Heating was continued at 65°C - 75°C for a further 1.5 hours.

### Example 2

7.5g (0.033 mole) of 4-(2-hydroxyethoxy)-phenyl-2-(2-hydroxy) propyl ketone dissolved in 30.0g glycerol propoxylated triacrylate (GPTA) was added to 20g (0.111 mole equivalent isocyanate) of Desmodur® N3200 along with 0.004g of dibutyltin dilaurate and 0.07g of BHT. The mixture was reacted at 55°C for 2 hours. 8.9g (0.069 mole) of HPA was added dropwise over 1 hour before raising the temperature to 65-75°C for 1.5 hours. 0.8g of glycerol in 6g of GPTA were then added to ensure complete reaction of all isocyanate groups; reacting for a further 1.5 hours.

### Example 3

The procedure of Example 2 was repeated replacing the GPTA with a urethane acrylate oligomer (Genomer T1200, Hans Rahn & Co).

### Example 4

The procedure of Example 2 was repeated but replacing the HPA with 8.0g of 2-hydroxyethylacrylate.

### Example 5

The procedure of Example 2 was repeated but replacing the HPA with 29.0g of a polypropyleneglycol monoacrylate (average MW = 420, Bisomer PPA6, International Speciality Chemicals).

### Example 6

The procedure of Example 2 was repeated replacing the HPA with 23.0g of a hydroxy polycaprolactone acrylate (Tone M-100, Union Carbide).

### Example 7

The procedure of Example 2 was repeated replacing the HPA with 36.0 g of dipentaerythritol pentaacrylate (Sartomer SR399).

### Example 8

The procedure of Example 2 was repeated replacing the HPA with 21.8 g of the polypropyleneglycol monoacrylate described in Example 5 and 17.6g of dipentaerythritol pentaacrylate.

### Example 9

The procedure of Example 2 was repeated replacing the biuret trimer of HMDI with an isocyanurate trimer of HMDI (Desmodur® N3300).

### Example 10

5.0g of (0.025 mole) of p-hydroxybenzophenone dissolved in 20g of GPTA was added to 15.0g (0.083 mole isocyanate equivalent) of a biuret trimer of HMDI along with 0.004g of dibutyltin dilaurate and 0.05g BHT. This mixture was reacted at 55°C for 3 hours. 21.0g (0.050 mole) of the polypropyleneglycol monoacrylate (as in example 5) was then added dropwise over 1.5 hours. The temperature was maintained at 55°C for 2 hours. before being raised to 65°C for 1.5 hours. Finally, 0.6g (0.007 mole) of glycerol in 5.0g GPTA was added and allowed to react for a further 1.5 hours.

### Example 11

4.1g (0.018 mole) of 4-(2-hydroxyethoxy)-phenyl-2-(2-hydroxy) propyl ketone dissolved in 20g of GPTA was added to 20.0g (0.111 mole isocyanate equivalent) of the HMDI biuret trimer along with 0.004g dibutyltin dilaurate and 0.05g BHT. The whole was allowed to react for 2.5 hours at 55°C. 7.2g (0.055 mole) of HPA was added dropwise over 1 hours and allowed to react for a further 2 hours. 7.5g (0.039 mole) of tripropylene glycol in 15g of GPTA was added over 1 hours and allowed to react for 1.5 hours. before the temperature was raised to 65°C. This temperature was maintained for 1.5 hours.

### Comparative Example 1

### (A fully Acrylated Desmodur® N3200 for the purposes of comparative extraction studies)

32.5g (0.25 mole) of 2-hydroxypropyl acrylate dissolved in 40g of GPTA was added to 50.0g (0.28 mole isocyanate equivalent) of Desmodur® N3200 along with 0.008g dibutyltin dilaurate and 0.2g BHT over a 2h period at 55°C. The temperature was maintained at 55°C for a further 2 hours before being raised to 65°C for 2 hours. 1.7g (0.018 mole) of glycerol in 5g GPTA was then added and allowed to react for a further 1.5 hours.

For the purposes of comparison, monoacrylated photoinitiator compounds according to JP-A-1-230603 were prepared.

### Comparative Example 2

3.0g (0.013 mole) of 4-(2-hydroxyethoxy)-phenyl-2 -(2-hydroxy) propyl ketone dissolved in 7.0g of GPTA was added to 3.03g (0.014 mole) of isophorone diisocyanate along with 0.001g of dibutyltin dilaurate and 0.02g of BHT. This mixture was reacted for 2 hours at 55°C. 1.63g (0.014 mole) of 2-hydroxyethyl acrylate (HEA) along with 1.0 g of GPTA were then added and the heating continued for a further 3.5 hours.

### Comparative Example 3

3.0 g (0.013) mole of 4-(2-hydroxyethoxy)-phenyl-2-(2-hydroxy)propyl ketone dissolved in 7.0 g of GPTA was added to 3.6 g (0.014 mole) of hydrogenated diphenylmethane diisocyanate together with 0.001 g of dibutyltin dilaurate and 0.02 g of BHT. The procedure of Comparative Example 2 was then followed but replacing the HEA with 1.83 g (0.014 mole) of 2-hydroxypropyl acrylate.

### Curing Studies

The materials described in Examples 2-11, and Comparative Examples 2 and 3 were each applied to both board (Enso G) and to glass plate with a K-Bar (No.1). The films were then cured using a Primarc Minicure UV rig. One medium pressure mercury UV lamp was used and the belt speed was 50 m min⁻¹. Cure speed was assessed as being the number of passes required to pass the thumb twist test.

The following compositions were prepared for the purposes of comparison.
(1) 8% (by weight) of 4-(2-hydroxyethoxy)phenyl-2-(2-hydroxy-propyl) ketone (Darocur® 2959) in a urethane acrylate oligomer (Graynor 934).
(ii) 8% of Darocur 2959 in a fully acrylated version of Desmodur® N3200 (as described in Comparative Example 1)
(iii) 8% of Darocur® 2959 in a mixture of 20% of GPTA and 80% of an epoxy novolac acrylate resin (Synacure E89420)
(iv) 50% of Comparative Example 2 and 50% GPTA
(v) 50% of Comparative Example 3 and 50% GPTA.

The films cured on glass plate were left for 24 hours before being removed. The total extractable component was determined by soaking about 0.1g of each film in 10cm³ of dichloromethane for 24 hours. The supernatant was removed and the film residue dried in a vacuum oven at 50°C. The weight difference before and after extraction represents the total extractable component from each film. The table below represents both the cure speed and extraction results.

| UV Curing Mixture | Cure Speed (Passes at 50 m/min) | Total Extractable Fraction |
|---|---|---|
| 8% Darocur® 2959 in urethane acrylate | 1 | 12.6% |
| | | |
| 8% Darocur® 2959 in fully acrylated Desmodur N3200 | 1 | 10.2% |
| | | |
| 8% Darocur® 2959 in epoxy novolac acrylate mixture | 1 | 18.0% |
| | | |
| Comparative Example 2 | 1 | 19.2% |
| | | |
| Comparative Example 3 | 1 | 20.8% |
| | | |
| 50% Comparative Example 2/50% GPTA | 1 | 11.5% |
| | | |
| 50% Comparative Example 3/50% GPTA | 1 | 13.0% |
| | | |
| Example 2 | 1 | 1.3% |
| | | |
| Example 3 | 1 | 2.2% |
| | | |
| Example 4 | 1 | 1.8% |
| | | |
| Example 5 | 2 | 6.9% |
| | | |
| Example 6 | 1 | 2.8% |
| | | |
| Example 7 | 1 | 1.0% |
| | | |
| Example 8 | 1 | 2.6% |
| | | |
| Example 9 | 1 | 3.2% |
| | | |
| Example 10 | 2 | 7.6% |
| | | |
| Example 11 | 1 | 1.8% |

## Claims

1. An ethylenically unsaturated photoinitiator component comprising the reaction product of a polyisocyanate containing at least three isocyanate groups with (i) a hydroxyl group-containing photoinitiator and (ii) a hydroxyl group-containing ethylenically unsaturated compound.

2. A liquid composition, curable by exposure to UV radiation, containing:-
(a) a polymerisable component comprising one or more ethylenically unsaturated monomer or oligomers; and
(b) a photoinitiator component as claimed in claim 1.

## Patentansprüche

1. Ethylenisch ungesättigte Photoinitiator-Komponente, umfassend das Reaktionsprodukt eines Polyisocynats, enthaltend mindestens drei Isocyanat-Gruppen mit (i) einem Hydroxyl -Gruppe enthaltendem Photoinitiator und (ii) einer Hydroxyl-Gruppe enthaltenden ethylenisch ungesättigten Verbindung.

2. Flüssige Zusammensetzung, vernetzbar durch Exponierung an UV-Strahlung, enthaltend:
(a) eine polymerisierbare Komponente, umfassend ein oder mehrere ethylenisch ungesättigte Monomere oder Oligomere; sowie
(b) eine Photoinitiator-Komponente nach Anspruch 1.

## Revendications

1. Constituant photoinitiateur éthyléniquement insaturé comprenant le produit de réaction d'un polyisocyanate contenant au moins trois groupes isocyanates avec (i) un photoinitiateur contenant un groupe hydroxyle et (ii) un composé éthyléniquement insaturé contenant un groupe hydroxyle.

2. Composition liquide, durcissable par exposition à une radiation UV. contenant:
(a) un constituant polymérisable comprenant un ou plusieurs monomères ou oligomères éthyléniquement insaturés; et
(b) un constituant photoinitiateur selon la revendication 1.
